## Europäisches Patentamt

## European Patent Office

## Office européen des brevets

(11) Veröffentlichungsnummer: **0 154 260**
**A2**

(12) **EUROPÄISCHE PATENTANMELDUNG**

(21) Anmeldenummer: **85101902.6**

(22) Anmeldetag: **21.02.85**

(51) Int. Cl.⁴: **A 01 C 5/06**

(30) Priorität: **22.02.84 DE 3406353**

(43) Veröffentlichungstag der Anmeldung:
**11.09.85 Patentblatt 85/37**

(84) Benannte Vertragsstaaten:
**AT BE CH DE FR GB IT LI LU NL SE**

(71) Anmelder: **Amazonen-Werke H. Dreyer GmbH & Co. KG**

**D-4507 Hasbergen-Gaste(DE)**

(72) Erfinder: **Gattermann, Bernd**

**D-2872 Hude(DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22(DE)**

(54) Vorsatzscharkörper.

(57) Vorsatzscharkörper (1) für die lösbare und abnehmbare Anordnung an einem Normalsäschar (2), der zumindest an dem unteren Bereich des Normalsäschares (2) angeordnet ist und das Normalsäschar (2) nach unten überragt, wobei auf der Vorderseite des Vorsatzscharkörpers (1) eine im Querschnitt U-förmige Tasche (3) angeordnet ist, die um den vorderen schmalen Bereich des Normalsäschares (2) faßt. Um ein einfaches Zusatzteil für Normalsäschare zu schaffen, so daß ohne aufwendige Umrüstarbeiten Saatgut auf eine große Tiefe im Boden abgelegt werden kann, ist der Vorsatzscharkörper (1) ein Verlängerungsstück des Normalsäschares (2) nach unten, wobei die untere Spitze (11) des Vorsatzscharkörpers (1) die untere Kante (12) des Normalsäschares (2) erheblich nach unten überragt und der Vorsatzscharkörper (1) bei Betrachtung in Fahrtrichtung (13) zumindest annähernd die gleiche Breite wie die Scharspitze (10) bzw. der vordere Bereich des Normalsäschares (2) aufweist.

0154260

Beschreibung

Die Erfindung betrifft einen Vorsatzscharkörper für die lösbare und abnehmbare Anordnung an einem Normalsäschar, · der zumindest an dem unteren Bereich des Normalsäschares angeordnet ist und das Normalsäschar nach unten überragt, wobei auf der Vorderseite des Vorsatzscharkörpers eine im Querschnitt U-förmige Tasche angeordnet ist, die um den vorderen schmalen Bereich des Normalsäschares faßt.

Die Drillmaschinen sind überwiegend mit als Schleppscharen ausgebildeten Normalsäscharen ausgestattet, mit denen man das Saatgut in 1 cm bis 2 cm Tiefe in den Boden ablegt. Um nun Bohnen in den Boden ablegen zu können, die mindestens 6 cm bis 8 cm tief in den Boden abzulegen sind, müssen sämtliche Normalsäschare in aufwendiger Arbeit gegen sog. Tiefsaatschare ausgetauscht werden, weil die Normalsäschare nur maximal 5 cm tief in den Boden eindringen können.

Durch die DE-PS 32 17 350 ist ein Vorsatzscharkörper, der als Bandsaatschuh ausgebildet ist, zum leichten Anbau an einem Normalsäschar bekannt geworden. Mit diesem Bandsaatschuh läßt sich Saatgut in sehr geringer Tiefe von 1 cm in Breitverteilung in den Boden einbringen. Zur Ablage von Saatgut in großen Tiefen eignet sich dieser Bandsaatschuh jedoch nicht.

Der Erfindung liegt die Aufgabe zugrunde, ein einfaches Zusatzteil für Normalsäschare zu schaffen, so daß ohne aufwendige Umrüstarbeiten Saatgut auf eine große Tiefe im Boden abgelegt werden kann.

Diese Aufgabe wird dadurch gelöst, daß der Vorsatzscharkörper ein Verlängerungsstück des Normalsäschares nach unten ist, daß die untere Spitze des Vorsatzscharkörpers die untere Kante des Normalsäschares erheblich nach unten überragt, und daß der Vorsatzscharkörper bei Betrachtung in Fahrtrichtung zumindest annähernd die gleiche Breite wie die Scharspitze bzw. der vordere Bereich des Normalsäschares aufweist.

2

0154260

Infolge dieser Maßnahmen wird aus dem Normalsäschar auf einfachste Weise ein Tiefsaatsäschar, so daß tief abzulegendes Saatgut, wie beispielsweise Bohnen in 6 cm bis 8 cm Tiefe in den Boden abgelegt werden können. Weiterhin wird die optimale Anstellung des Scharhalters beibehalten, so daß genau wie bei dem Normalsäschar bei normalen Säbedingungen die Spannung der Federn für den Schardruck über den gesamten Einsatzbereich optimal beibehalten bleibt. Durch die Ausbildung des Verlängerungsstücks und der Scharspitze bzw. des vorderen Bereichs des Normalsäschares bei Betrachtung in Fahrtrichtung mit annähernd gleicher Breite wird verhindert, daß die beim tiefen Eindringen in den Boden von diesem auf den Vorsatzscharkörper ausgeübten bedeutenden Kräfte Bewegungen des Vorsatzscharkörpers in seitlicher und in Längsrichtung relativ zum Normalsäschar und die damit verbundenen erheblichen Störungen der Ablage des Saatgutes in den Boden hervorrufen. Ein Zusammenfallen des Säschlitzes von selbst wird im unteren Bereich erreicht. Es wird gewährleistet, daß das Saatgut unter geringer Bodenbewegung in engen Reihenabständen abgelegt werden kann.

Damit der Vorsatzscharkörper auch in härteren Böden tief in den Boden eindringen kann, ohne daß der Schardruck verhältnismäßig hoch sein muß, ist vorzugsweise vorgesehen, daß der Vorsatzscharkörper eine auf Griff stehende Scharspitze mit zumindest annähernd gleicher Breite wie die Scharspitze des Normalsäschares aufweist.

Um beispielsweise Bohnen in optimaler Tiefe in den Boden ablegen zu können, ist vorzugsweise vorgesehen, daß der Vorsatzscharkörper das Normalsäschar um zumindest 3 cm, vorzugsweise 5 cm, nach unten überragt.

Damit keine Saatkörner auf dem Vorsatzscharkörper liegen bleiben, schließt vorteilhafterweise die Hinterkante des Vorsatzscharkörpers zumindest annähernd mit der Hinterkante der Scharspitze ab. Hierdurch ist gewährleistet, daß die Saatkörner direkt auf den tiefen Boden der Säfurche fallen.

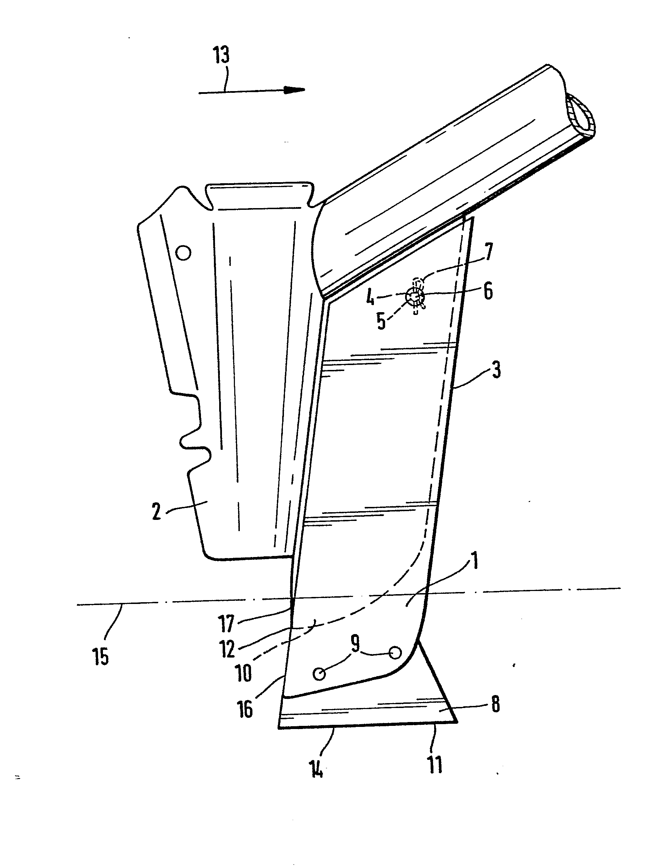

Die Erfindung wird im folgenden anhand eines Ausführungsbeispieles näher erläutert. Die Zeichnung zeigt

die erfindungsgemäße Anordnung eines Vorsatzscharkörpers an einem Normalsäschar in Seitenansicht.

Ein Vorsatzscharkörper 1 ist an einem Normalsäschar 2 lös- und abnehmbar angeordnet. Der Vorsatzscharkörper 1 überragt das Normalsäschar 2 erheblich nach unten. Der obere Bereich des Vorsatzscharkörpers 1 weist eine im Querschnitt U-förmige Tasche 3 auf, die sich über die Höhe des vorderen Bereiches des Normalsäschares 2 erstreckt und dessen vorderen schmalen Bereich umfaßt. Die Tasche 3 weist in ihrem oberen Bereich eine Bohrung 4 auf, die mit einer Bohrung 5 des Normalsäschares 2 zur Deckung zu bringen ist. Der Vorsatzscharkörper 1 ist durch einen durch die Bohrungen 4 und 5 gesteckten Bolzen 6 miteinem Federstecker 7 auf dem Normalsäschar 2 gesichert.

Der untere Bereich des Vorsatzscharkörpers 1 weist eine auf Griff stehende Scharspitze 8 auf, die mittels Nieten 9 an der U-förmigen Tasche 3 befestigt ist. Die Scharspitze 8 des Vorsatzscharkörpers 1 befindet sich unterhalb der Scharspitze 10 des Normalsäschares 2. Der Vorsatzscharkörper 1 ist somit ein Verlängerungsstück des Normalsäschares 2 nach unten. Die untere Spitze 11 der Scharspitze 8 des Vorsatzscharkörpers 1 überragt die untere Kante 12 der Scharspitze 10 des Normalsäschares 2 erheblich nach unten um zumindest 3 cm, vorzugsweise 5 cm.

Der als Verlängerungsstück des Normalsäschars 2 ausgebildete Vorsatzscharkörper 1 weist bei Betrachtung in Fahrtrichtung 13 die gleiche Breite wie die Scharspitze 10 bzw. der vordere Bereich des Normalsäschares 2 auf. Die Breite des U-förmigen Querschnittes der Tasche 3 ist über die gesamte Länge des Vorsatzscharkörpers 1 konstant. Die Scharspitze 8 des Vorsatzscharkörpers 1 weist die gleiche Breite wie die Scharspitze 10 des Normalsäschares 2 auf. Die Unterkante 14 des Vorsatzscharkörpers 1 verläuft während des Einsatzes etwa parallel zur Bodenoberfläche 15, die mit einer strichpunktierten Linie angedeutet ist. Die Hinterkante 16 des Vorsatzscharkörpers 1 schließt mit der Hinterkante 17 der Scharspitze 10 des Normalsäschares 2 ab.

Die Funktion des Vorsatzscharkörpers ist folgende:

Mit einer mit den Normalsäscharen 2 ausgerüsteten Sämaschine wird das Saatgut, vor allem Getreide, in Tiefen von 1 cm im Boden abgelegt. Aufgrund der Konstruktion der Sämaschine und der Anlenkung der Normalsäschare kann ein maximaler Tiefgang der Normalsäschare 2 von 5 cm erreicht werden. Wenn der Landwirt mit einer mit Normalsäscharen 2 ausgerüsteten Sämaschine beispielsweise Bohnen 8 cm tief in dem Boden ablegen will, bringt er an jedem Normalsäschar 2 einen Vorsatzscharkörper 1 an, der ein Verlängerungsstück des Normalsäschares 2 ist. Dieser Vorsatzscharkörper 1 überragt das Normalsäschar 2 erheblich nach unten, so daß der Vorsatzscharkörper 1 das Normalsäschar 2 um 3 cm, vorzugsweise 5 cm, nach unten verlängert. Damit der Schardruck auf die einzelnen Schare nicht so sehr erhöht werden muß, weist der Vorsatzscharkörper 1 die auf Griff stehende Scharspitze 8 auf, die den Vorsatzscharkörper 1 mit in den Boden hineinzieht.

Der Schardruck darf nicht zu groß sein, damit die Säschare beim Auftreffen auf sich im Boden befindliche Hindernisse nach oben ausweichen können, so daß die Säschare nicht beschädigt werden. Aufgrund der Anordnung der Vorsatzscharkörper 1 an den Normalsäscharen 2 können mit einer mit Normalsäscharen 2 ausgerüsteten Sämaschine ohne aufwendige Umrüstarbeiten beispielsweise Bohnen in den von den Vorsatzscharkörpern 1 geschaffenen Säfurchen auf 8 cm Tiefe abgelegt werden.

GRUNECKER. KINKELDEY. STOCKMAIR & PARTNER

PATENTANWÄLTE 0154260

A GRUNECKER
DR H KINKELDEY
DR W STOCKMAIR
DR K SCHUMANN
P H JAKOB
DR G BEZOLD
W MEISTER
H HILGERS
DR H MEYER-PLATH
DR M BOTT-BODENHAUSEN
DR U KINKELDEY

LICENCE EN DROIT DE L UNIV DE GENÈVE

8000 MÜNCHEN 22
MAXIMILIANSTRASSE 58
21.2.1985
EP 2185 - 106/Sch.

Amazonen-Werke

H.Dreyer GmbH & Co.KG

4507 Hasbergen/Gaste

Vorsatzscharkörper

Patentansprüche

1. Vorsatzscharkörper für die lösbare und abnehmbare Anordnung an einem Normalsäschar, der zumindest an dem unteren Bereich des Normalsäschares angeordnet ist und das Normalsäschar nach unten überragt, wobei auf der Vorderseite des Vorsatzscharkörpers eine im Querschnitt U-förmige Tasche angeordnet ist, die um den vorderen schmalen Bereich des Normalsäschares faßt, d a d u r c h  g e k e n n z e i c h n e t , daß der Vorsatzscharkörper (1) ein Verlängerungsstück des Normalsäschares (2) nach unten ist, daß die untere Spitze (11) des Vorsatzscharkörpers (1) die untere Kante (12) des Normalsäschares (2) erheblich nach unten überragt, und daß der Vorsatzscharkörper (1) bei Betrachtung in Fahrtrichtung (13) zumindest annähernd die gleiche Breite wie die Scharspitze (10) bzw. der vordere Bereich des Normalsäschares (2) aufweist.

2. Vorsatzscharkörper nach Anspruch 1, d a d u r c h   g e - k e n n z e i c h n e t , daß die Breite des U-förmigen Querschnittes der Tasche (3) über die gesamte Länge des Vorsatzscharkörpers (1) zumindest annähernd konstant ist.

3. Vorsatzscharkörper nach Anspruch 1 oder 2, d a d u r c h   g e k e n n z e i c h n e t , daß der Vorsatzscharkörper (1) eine auf Griff stehende Scharspitze (8) mit zumindest annähernd gleicher Breite wie die Scharspitze (10) des Normalsäschares (2) aufweist.

4. Vorsatzscharkörper nach wenigstens einem der vorstehenden Ansprüche, d a d u r c h   g e k e n n z e i c h n e t , daß der Vorsatzscharkörper (1) das Normalsäschar (2) um zumindest 3 cm, vorzugsweise 5 cm, nach unten überragt.

5. Vorsatzscharkörper nach wenigstens einem der vorstehenden Ansprüche, d a d u r c h   g e k e n n z e i c h n e t , daß die Unterkante (14) des Vorsatzscharkörpers (1) während des Einsatzes etwa parallel zur Bodenoberfläche (15) verläuft.

6. Vorsatzscharkörper nach wenigstens einem der vorstehenden Ansprüche, d a d u r c h   g e k e n n z e i c h n e t , daß die Hinterkante (16) des Vorsatzscharkörpers (1) zumindest annähernd mit der Hinterkante (17) der Scharspitze (10) des Normalsäschares (2) abschließt.